Europäisches
Patentamt

European
Patent Office

Office européen
des brevets

(11) **EP 1 809 951 B1**

(12) **EUROPEAN PATENT SPECIFICATION**

(45) Date of publication and mention
of the grant of the patent:
**30.01.2019 Bulletin 2019/05**

(51) Int Cl.:
**F25B 1/00** *(2006.01)*  **F25B 49/02** *(2006.01)*

(21) Application number: **05821349.7**

(22) Date of filing: **31.10.2005**

(86) International application number:
**PCT/US2005/039287**

(87) International publication number:
**WO 2006/050272 (11.05.2006 Gazette 2006/19)**

(54) **VSD CONTROL**

VSD-STEUERUNG

RÉGLAGE D'UN VARIATEUR DE VITESSE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **29.10.2004 US 623355 P**

(43) Date of publication of application:
**25.07.2007 Bulletin 2007/30**

(73) Proprietor: **Carrier Corporation
Farmington, CT 06034-4015 (US)**

(72) Inventors:
• **WILSON, Francis, P.
Jamesville, NY 13078 (US)**
• **ROUSEAU, William, H.
Savannah, GA 31405 (US)**

• **WILSON, James, C.
Cazenovia, NY 13035 (US)**
• **YANNASCOLI, Donald
Manlius, NY 13104 (US)**

(74) Representative: **Dehns
St. Brides House
10 Salisbury Square
London EC4Y 8JD (GB)**

(56) References cited:
**US-A- 4 282 719    US-A- 4 663 942
US-A- 5 036 676    US-B1- 6 370 888
US-B1- 6 370 888    US-B1- 6 508 303
US-B1- 6 657 334    US-B2- 6 772 607**

EP 1 809 951 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

This invention relates to motor control. More particularly, the invention relates to control of variable speed drives for compressor motors.

In refrigeration applications, a compressor is used to compress a working fluid (the refrigerant) from initial (suction) conditions to compressed (discharge) conditions. The initial conditions are characterized by a saturated suction temperature (SST) and the discharge conditions are characterized by a saturated discharge temperature (SDT) . For a given refrigerant, the compressor (exclusive of the motor powering it) will have a performance envelope dictated by a variety of considerations including efficiency and longevity. This envelope may be approximated by a three dimensional space whose dimensions are SST, SDT, and a third dimension (e.g., a compressor speed or a power parameter) indicative of an output in view of the other two dimensions. Considerations involving the motor and other components will further restrict the system operating envelope within the compressor operating envelope.

An exemplary compressor is powered by a hermetic motor which is, in turn, powered by a variable speed drive (VSD) .The VSD supplies an alternating current output voltage at an output frequency. The VSD receives power from a power supply (e.g., 460 VAC, 60 Hz). In a basic VSD, the relationship between output voltage and output frequency is substantially fixed and approximately linear. With such a basic VSD and hermetic motor, the motor speed is a substantially fixed and approximately linear function of drive frequency. In the absence of a variable ratio transmission, the ratio of motor speed to compressor speed will be fixed and may be a simple 1:1 ratio.

The torque required by the compressor (and thus supplied by the motor) will essentially be a function of SDT and SST and will essentially be independent of the third compressor performance envelope parameter. In the basic operation, at given SST and SDT, the motor and compressor speed will be determined by the load (e.g., the air conditioning load). A given motor speed is associated with a proportional frequency position on the drive's fixed voltage/frequency curve (line). At a given point on the voltage/frequency curve, however, the current draw of the drive will accordingly be determined by the SST and SDT values. For example, at a given voltage and frequency, if the SDT were to increase suddenly, the torque would increase at a given speed thus necessitating a power increase from the VSD and, accordingly, a current increase.

Certain VSD's permit selection of the voltage/frequency relationship. These are typically preset when the drive is associated with its motor for a given application.

US 6370888 discloses a method of the type defined in the precharacterising part of claim 1.

BRIEF SUMMARY OF THE INVENTION

The invention provides a method for controlling a variable speed drive supplying electric power of a voltage and frequency to a motor to drive a compressor operating within a compressor performance envelope, the method comprising: within a portion of the envelope, operating the drive with a dynamically changing relationship of said voltage to said frequency so as to operate the compressor over a range of relative suction and discharge conditions unavailable at a fixed default voltage to frequency relationship; characterised in that the operating comprises: operating at a first condition with a first torque and with a ratio of said voltage to said frequency having a first value and with a first current draw that is a maximum target current draw; and transitioning from the first condition to a second condition with a second torque, greater than the first torque, and with a ratio of said voltage to said frequency having a second value, greater than the first value.

The invention further provides a system for controlling a variable speed drive (VSD) supplying electric power to a motor to a load within a performance envelope, the system comprising an electronic controller programmed to operate the VSD to supply the electric power: in a first portion of the envelope, operating the VSD below a limit on a current draw of the drive; and in a second portion of the envelope, operating the VSD essentially at the limit on current draw and with varying voltage to frequency ratio; characterised in that the operating comprises: operating at a first condition with a first torque and with a ratio of said voltage to said frequency having a first value and with a first current draw that is a maximum target current draw; and transitioning from the first condition to a second condition with a second torque, greater than the first torque, and with a ratio of said voltage to said frequency having a second value, greater than the first value.

The relationship in this portion may be essentially current-limited by a maximum current of the drive. In the second condition, a second current draw may be essentially no greater than the first current draw. The second voltage may be greater than the first voltage and/or the second frequency may be smaller than the first frequency.

The details of one or more embodiments of the invention are set forth in the accompanying drawings and the description below. Other features, objects, and advantages of the invention will be apparent from the description and drawings, and from the claims.

BRIEF DESCRIPTION OF THE DRAWINGS

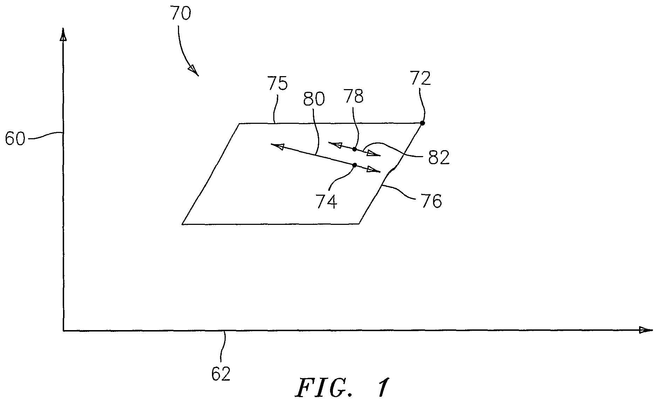

FIG. 1 is a graph of compressor operating parameters.

Like reference numbers and designations in the various drawings indicate like elements.

DETAILED DESCRIPTION

In a refrigeration system, if the compressor physical and operating parameters are given, control of motor and VSD operating parameters may be utilized to provide an expanded envelope of operation. For example, the compressor physical parameters would include the configuration and size of the compressor and the nature of its working fluid. The operating parameters would include the saturated suction temperature (SST) and saturated discharge temperature (SDT) for a target or other operating environment. These values may serve as proxies for suction and discharge pressures.

For a given compressor, the required motor torque will be a function of the SST and SDT. If these values are fixed, torque will be essentially fixed. If motor torque is fixed then the motor power output is proportionaL to the motor (rotational) speed. In a typical system, there is a fixed linear normal or default voltage/frequency curve (shaft speed and frequency being essentially related by a constant factor).

Possibilities arise when different torques are considered. FIG. 1 shows exemplary compressor operating conditions characterized by the saturated discharge temperature 60 and saturated suction temperature 62 of refrigerant being compressed. The closed curve 70 contains the operating points practical for a given compressor/fluid. Different drive and motor combinations may be selected to permit operation in some or all of this envelope. Where such combinations serve overlapping portions of that envelope, they may have different efficiency, cost, or other attributes. By way of example, FIG. 1 shows a maximum point 72 which corresponds to the highest torque requirement. Point 74 identifies a desired normal operating condition. For example, in a building air conditioning system the normal condition may be associated with interior and exterior temperatures, each associated with a respective SST and SDT. The operating envelope may include, as an additional dimension, a compressor speed range.

The power input to the motor is given by the equation:

$$\dot{W}_{in} = V \cdot I \cdot PF \sqrt{3}$$

where V is voltage, I is current, and PF is the power factor. If the power factor is constant, then, at fixed power, the product of voltage and current is constant.

The power output is:

$$\dot{W}_{out} = \eta_m \dot{W}_{in}$$

where $\eta_m$ is the motor efficiency.

Combining these yields:

$$\dot{W}_{out} = \eta_m V \cdot I \cdot PF \sqrt{3}$$

If the motor is idealized as having a fixed resistance R, the current I is simply V/R so that:

$$\dot{W}_{out} = \eta_m \frac{V^2}{R} PF \sqrt{3} = T\omega$$

where T is the motor torque and $\omega$ is the shaft speed.

Solving for R, this yields:

$$R = \eta_m \frac{V^2}{T\omega} PF \sqrt{3}$$

As an approximation, R is treated as a constant even though it will vary somewhat based upon operating conditions (especially upon the temperature of the motor windings. Thus at first and second operating conditions:

$$\eta_{m1} \frac{V_1^2}{T_1 \omega_1} PF_1 \sqrt{3} = \eta_{m2} \frac{V_2^2}{T_2 \omega_2} PF_2 \sqrt{3}$$

If the power factor and efficiency are also treated as constant (which may be a valid approximation for small changes), then:

$$\frac{V_1^2}{T_1 \omega_1} = \frac{V_2^2}{T_2 \omega_2}$$

Consistent with the approximations used, at a fixed motor speed, there is a small change in required torque:

$$\frac{T_2}{T_1} = \left( \frac{V_2}{V_1} \right)^2$$

At a fixed input power, the torque output by the motor will vary as the inverse of the motor speed. Thus for first and second operating conditions:

$$\frac{T_2}{T_1} = \frac{\omega_1}{\omega_2}$$

Typically, for a given supply voltage (e.g., 230-3-60 or 460-3-60 VAC) VSD's are rated by maximum current output and priced accordingly. The maximum output voltage will be limited by the supply voltage. The VSD may be selected to have the capacity to operate at the highest torque and power of the compressor or at another extreme condition along an SDT-limited portion 75 of the curve 70 or an SST-limited portion 76 of the curve 70. For example, if this max. design point is the point 72, the VSD may be selected to provide a desired power at such point. If the volts/frequency ratio of the drive is fixed, the drive will provide enough power to operate the motor at any other point in the operating envelope at the same or lower speed.

Alternatively, however, a smaller VSD may be selected. In such a situation, the VSD may be operated normally until the maximum current condition is detected (e.g., from a point 78 which is closer to the origin to and perhaps somewhat beyond the normal point 74 but not to the curve 70). For example, FIG. 1 shows constant torque curves 80 and 82 through the aforementioned normal point 74 and an increased SDT point 78, respectively. Attempting to service beyond this point 78 (e.g., toward the point 72) by moving along the normal V/f curve would involve a current overload. However, the increased torque may be achieved through increasing the voltage and decreasing the drive frequency. If the required torque is increased by the factor of 1.5, the voltage would have to increase by the square root of that factor and the speed would change by the inverse of that factor (decrease). Drive and/or motor efficiency may decrease which might require further speed reduction to maintain current below overload conditions. Accordingly, in portions of the envelope above the line 82, operation will be at reduced power output. The V/f curve may be dynamically controlled in this portion of the envelope so as to provide maximum power without overloading the drive or motor. Below this curve, operation may be along the normal V/f curve or along yet alternative V/f curves.

EXAMPLE

A particular job application specifies that a variable speed chiller will operate at 42/100 (SST=42F (5.6°C) or 51.7psia (356.5 kPa) suction pressure and SDT=100F (37.8°C) or 140psia (965.3 kPa) discharge pressure) 90% of the time, but must also be able to operate at 42/122 (SDT=122F (50°C) or 191psia (1316.9 kPa) discharge pressure) some of the time. This part-time condition may be achieved at reduced capacity. For these operating conditions, typical compressor performance values are as follows. At 42/100, $W_1$=61kW, $I_1$=93A and $Torque_1$=1017kJ at $\omega_1$ (speed at full capacity). At 42/122, $W_2$=80kW, $I_2$=122A and $Torque_2$=1333kJ at $\omega_2$ (speed at full capacity). Rather than choosing the VSD (variable speed drive) based on the larger 122-ampere current condition, one could choose the VSD based on the 93-ampere current condition since the chiller is not actually required to operate at 42/122 at $\omega_1$. In doing this, money could be saved since VSD costs are proportional to the current output of the drive. For example, if the nominal fixed

4

volts/frequency proportion of the drive is 460V/60Hz this ratio can be dynamically changed to meet higher torque demand conditions at reduced speed. Table 1 shows how this is accomplished.

Table 1

| Power (kW) | | Voltage | Current | ω | Torque | | $3^{0.5}$xPF | V/ω |
|---|---|---|---|---|---|---|---|---|
| T x ω | V x I x 3 x PF | (V) | (A) | (Hz) | (ft•lb$_f$) | (kW•s) | (-) | ratio |
| 61.0 | 61.0 | 460.0 | 93.0 | 60.00 | 112.0 | 1.017 | 1.426 | 460/60 |
| 80.0 | 80.0 | 460.0 | 122.0 | 60.00 | 146.9 | 1.333 | 1.426 | 460/60 |
| 80.0 | 80.0 | 526.8 | 106.5 | 60.00 | 146.9 | 1.333 | 1.426 | 526.8/60 |
| 69.9 | 69.9 | 460.0 | 106.5 | 52.39 | 146.9 | 1.333 | 1.426 | 460/52.39 |
| 61.0 | 61.0 | 401.7 | 106.5 | 45.75 | 146.9 | 1.333 | 1.426 | 460/52.39 |
| 61.0 | 61.0 | 460.0 | 93.0 | 45.75 | 146.9 | 1.333 | 1.426 | 460/45.75 |
| 80.0 | 80.0 | 460.0 | 122.0 | 45.75 | 192.6 | 1.749 | 1.426 | 460/45.75 |

The first row indicates the initial low torque 42/100 condition: 112 ft•lbf (1017kJ) is the maximum torque that the motor can deliver at a voltage/frequency ratio of 460/60. The second row indicates the 42/122 high torque condition: the motor needs to deliver 146.9 ft.lbf (1333 kJ). However, the current requirement may exceed that of an economically selected drive. The third row condition shows the result of an increased voltage at constant w to determine the new V/w ratio (526.8/60 which is the same as 460/52.39) required to deliver the required 146.9 ft.lbf (1333 kJ). The current is accordingly reduced to 106.5V. The fourth row condition shows the VSD voltage set to 460V with 460/52.39 ratio. The fifth row shows the maintenance of the low torque power level (6lkW) at the 460V/52.39Hz ratio (multiply 60 by the ratio of torques (i.e., 60*112/146.9) to get the 45.75Hz frequency) . However, to maintain 93 - ampere current and knowing that at a given speed, voltage is inversely proportional to current, the new voltage is 401.7 (460*93/106.5). The maximum torque that the motor can deliver is actually 192.6 ft•lbf (1749 kJ). (((60/45.75) *460/460)2*112). The sixth row shows the maximum torque that the motor could otherwise actually deliver at 122-amperes current.

One or more embodiments of the present invention have been described. Nevertheless, it will be understood that various modifications may be made without departing from the scope of the invention as defined by the claims. For example, the drive/motor control may take into account additional factors beyond those discussed and, thereby, further balance the results achieved. Accordingly, other embodiments are within the scope of the following claims.

**Claims**

1.  A method for controlling a variable speed drive supplying electric power of a voltage and frequency to a motor to drive a compressor operating within a compressor performance envelope, the method comprising:

    within a portion of the envelope, operating the drive with a dynamically changing relationship of said voltage to said frequency so as to operate the compressor over a range of relative suction and discharge conditions unavailable at a fixed default voltage to frequency relationship;
    **characterised in that** the operating comprises:

    operating at a first condition with a first torque and with a ratio of said voltage to said frequency having a first value and with a first current draw that is a maximum target current draw; and
    transitioning from the first condition to a second condition with a second torque, greater than the first torque, and with a ratio of said voltage to said frequency having a second value, greater than the first value.

2.  The method of claim 1 wherein said relationship in said portion being essentially current limited by a maximum current of the drive.

3.  The method of claim 1 wherein:
    in the second condition, a second current draw is essentially no greater than the first current draw.

4.  The method of claim 1 wherein at least one of::

the second voltage is greater than the first voltage; and
the second frequency is smaller than the first frequency.

**5.** A system for controlling a variable speed drive (VSD) supplying electric power to a motor to a load within a performance envelope, the system comprising an electronic controller programmed to operate the VSD to supply the electric power:

in a first portion of the envelope, operating the VSD below a limit on a current draw of the drive; and
in a second portion of the envelope, operating the VSD essentially at the limit on current draw and with varying voltage to frequency ratio;
**characterised in that** the operating comprises:

operating at a first condition with a first torque and with a ratio of said voltage to said frequency having a first value and with a first current draw that is a maximum target current draw; and
transitioning from the first condition to a second condition with a second torque, greater than the first torque, and with a ratio of said voltage to said frequency having a second value, greater than the first value.

**6.** The system of claim 5 wherein:

in the first portion, the operating is with a voltage to frequency ratio of an essentially fixed finest value; and
in the second portion, the operating is at least partially at motor torque conditions where the drive would not be effective to drive the motor at the ratio first value.

**7.** The system of claim 5 wherein:

in the first portion, the operating is with a voltage to frequency ratio of an essentially fixed first value; and
in the second portion, the operating is at a voltage to frequency ratio greater than the first value.


**Patentansprüche**

**1.** Verfahren zum Steuern eines drehzahlvariablen Antriebs, der elektrische Energie einer Spannung und einer Frequenz einem Motor zur Verfügung stellt, um einen Kompressor anzutreiben, der innerhalb eines Kompressorleistungsprofils betrieben wird, wobei das Verfahren Folgendes umfasst:

Betreiben des Antriebs innerhalb eines Bereichs des Profils mit einer sich dynamisch verändernden Beziehung der Spannung zu der Frequenz, um den Kompressor über einen Bereich von relativen Saug- und Ausstoßzuständen zu betreiben, die bei einer fixen standardmäßigen Spannungs-Frequenz-Beziehung nicht verfügbar sind;
**dadurch gekennzeichnet, dass** das Betreiben Folgendes umfasst:

Betreiben eines ersten Zustands mit einem ersten Drehmoment und einem Verhältnis der Spannung zu der Frequenz, das einen ersten Wert aufweist, und mit einer ersten Stromentnahme, die eine maximale Zielstromentnahme ist; und
Umstellen von dem ersten Zustand in einen zweiten Zustand mit einem zweiten Drehmoment, das größer als das erste Drehmoment ist, und einem Verhältnis von der Spannung zu der Frequenz, die einen zweiten Wert aufweist, der größer als der erste Wert ist.

**2.** Verfahren nach Anspruch 1, wobei die Beziehung in dem Bereich im Wesentlichen Strom ist, der durch einen Maximalstrom des Antriebs begrenzt ist.

**3.** Verfahren nach Anspruch 1, wobei:
in dem zweiten Zustand eine zweite Stromentnahme im Wesentlichen nicht größer als die erste Stromentnahme ist.

**4.** Verfahren nach Anspruch 1, wobei mindestens eines des Folgenden zutrifft:

die zweite Spannung ist größer als die erste Spannung; und
die zweite Frequenz ist kleiner als die erste Frequenz.

**5.** System zum Steuern eines drehzahlvariablen Antriebs (VSD), das einem Motor zu einer Last elektrische Energie innerhalb eines Leistungsprofils zur Verfügung stellt, wobei das System eine elektronische Steuerung umfasst, die programmiert ist, den VSD zu betreiben, um die elektrische Energie folgendermaßen zur Verfügung zu stellen:

in einem ersten Bereich des Profils, das den VSD unterhalb eines Limits einer Stromentnahme des Antriebs betreibt; und
in einem zweiten Bereich des Profils, das den VSD im Wesentlichen an dem Limit der Stromentnahme und mit einem variierenden Spannungs-Frequenz-Verhältnis betreibt;
**dadurch gekennzeichnet, dass** das Betreiben Folgendes umfasst:

Betreiben in einem ersten Zustand mit einem ersten Drehmoment und einem Verhältnis der Spannung zu der Frequenz, das einen ersten Wert aufweist, und mit einer ersten Stromentnahme, die eine maximale Zielstromentnahme ist; und
Umstellen von dem ersten Zustand in einen zweiten Zustand mit einem zweiten Drehmoment, das größer als das erste Drehmoment ist, und mit einem Verhältnis der Spannung zu der Frequenz, das einen zweiten Wert aufweist, der größer als der erste Wert ist.

**6.** System nach Anspruch 5, wobei:

in dem ersten Bereich das Betreiben mit einem Spannungs-Frequenz-Verhältnis eines im Wesentlichen fixierten besten Wertes stattfindet; und
in dem zweiten Bereich das Betreiben mindestens teilweise unter Motordrehzahlzuständen stattfindet, in welchen der Antrieb nicht effizient wäre, um den Motor mit dem Verhältnis des ersten Wertes anzutreiben.

**7.** System nach Anspruch 5, wobei:

in dem ersten Bereich, das Betreiben mit einem Spannungs-Frequenz-Verhältnis eines im Wesentlichen fixierten ersten Wertes stattfindet; und
in dem zweiten Bereich, das Betreiben bei einem Spannungs-Frequenzverhältnis stattfindet, das größer als der erste Wert ist.

**Revendications**

**1.** Procédé pour commander un variateur de vitesse alimentant en puissance électrique d'une certaine tension et d'une certaine fréquence un moteur pour entraîner un compresseur fonctionnant à l'intérieur d'une enveloppe de performances de compresseur, le procédé comprenant :

à l'intérieur d'une portion de l'enveloppe, le fonctionnement du variateur avec une relation évoluant dynamiquement entre ladite tension et ladite fréquence de manière à faire fonctionner le compresseur sur une plage de conditions d'aspiration et d'évacuation relatives inexistantes lors d'une relation entre tension et fréquence par défaut fixe ;
**caractérisé en ce que** le fonctionnement comprend :

le fonctionnement dans des premières conditions avec un premier couple et avec un premier rapport entre ladite tension et ladite fréquence ayant une première valeur et avec un premier prélèvement de courant qui est un prélèvement de courant cible maximal ; et
la transition des premières conditions à des secondes conditions avec un second couple, supérieur au premier couple, et avec un rapport entre ladite tension et ladite fréquence ayant une seconde valeur, supérieure à la première valeur.

**2.** Procédé selon la revendication 1, dans lequel ladite relation dans ladite portion étant principalement limitée en courant par un courant maximal du variateur.

**3.** Procédé selon la revendication 1, dans lequel :
dans les secondes conditions, un second prélèvement de courant est sensiblement inférieur ou égal au premier prélèvement de courant.

**4.** Procédé selon la revendication 1, dans lequel au moins l'un parmi :

la seconde tension est supérieure à la première tension ; et
la seconde fréquence est inférieure à la première fréquence.

**5.** Système pour commander un variateur de vitesse (VSD) alimentant en puissance électrique un moteur vers une charge à l'intérieur d'une enveloppe de performances, le système comprenant un dispositif de commande électronique programmé pour faire fonctionner le VSD pour alimenter en puissance électrique :

une première portion de l'enveloppe, faisant fonctionner le VSD en dessous d'une limite d'un prélèvement de courant du variateur ; et
une seconde portion de l'enveloppe, faisant fonctionner le VSD sensiblement à la limite du prélèvement de courant et avec un rapport entre tension et fréquence variable ;
**caractérisé en ce que** le fonctionnement comprend :

le fonctionnement dans des premières conditions avec un premier couple et avec un rapport entre ladite tension et ladite fréquence ayant une première valeur et avec un premier prélèvement de courant qui est un prélèvement de courant cible maximal ; et
la transition des premières conditions à des seconds conditions avec un second couple, supérieur au premier couple, et un rapport entre ladite tension et ladite fréquence ayant une seconde valeur, supérieure à la première valeur.

**6.** Système selon la revendication 5, dans lequel :

dans la première portion, le fonctionnement se fait avec un rapport entre tension et fréquence de la meilleure valeur sensiblement fixe; et
dans la seconde portion, le fonctionnement se fait au moins partiellement dans des conditions de couple moteur où le variateur ne serait pas efficace pour entraîner le moteur selon la première valeur de rapport.

**7.** Système selon la revendication 5, dans lequel :

dans la première portion, le fonctionnement se fait avec un rapport entre tension et fréquence d'une première valeur sensiblement fixe; et
dans la seconde portion, le fonctionnement se fait à un rapport entre tension et fréquence supérieur à la première valeur.

FIG. 1

**EP 1 809 951 B1**

**Patent documents cited in the description**

- US 6370888 B